(19) Europäisches Patentamt
European Patent Office
Office européen des brevets

(11) **EP 1 513 700 B1**

(12) **EUROPÄISCHE PATENTSCHRIFT**

(45) Veröffentlichungstag und Bekanntmachung des Hinweises auf die Patenterteilung:
**04.05.2011   Patentblatt 2011/18**

(51) Int Cl.:
*B60W 10/06* (2006.01)          *B60W 10/08* (2006.01)
*B60W 30/18* (2006.01)

(21) Anmeldenummer: **03759833.1**

(22) Anmeldetag: **03.06.2003**

(86) Internationale Anmeldenummer:
**PCT/DE2003/001874**

(87) Internationale Veröffentlichungsnummer:
**WO 2003/106211 (24.12.2003 Gazette 2003/52)**

(54) **VERFAHREN ZUM STEUERN EINES DREHMOMENTS**

METHOD FOR CONTROLLING A TORQUE

PROCEDE DE REGULATION D'UN COUPLE

(84) Benannte Vertragsstaaten:
**DE FR IT**

(30) Priorität: **17.06.2002   DE 10226929**

(43) Veröffentlichungstag der Anmeldung:
**16.03.2005   Patentblatt 2005/11**

(73) Patentinhaber: **Continental Automotive GmbH**
**30165 Hannover (DE)**

(72) Erfinder:
• **MEIER, Thomas**
**93053 Regensburg (DE)**

• **MICHAU, Peter**
**38102 Braunschweig (DE)**
• **HIRSCH, Thomas**
**93053 Regensburg (DE)**

(56) Entgegenhaltungen:
| | |
|---|---|
| **EP-A- 0 328 299** | **EP-A- 0 328 362** |
| **EP-A- 0 329 407** | **EP-A- 0 638 742** |
| **EP-A- 1 072 459** | **EP-A- 1 078 805** |
| **DE-A- 4 409 122** | **DE-A- 19 711 618** |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren nach dem Oberbegriff von Anspruch 1.

Bei einem bekannten Verfahren zur Regelung des von einem Motor beim Anfahren eines Kraftfahrzeuges mittels einer automatisierten Kupplung auf ein Getriebe übertragenen Drehmomentes (DE 199 58 076 A1) werden einem Steuergerät zur Regelung des Drehmomentes als Eingangsgrößen der vom Kraftfahrer gewünschte Vortrieb und die aktuelle Motordrehzahl zugeführt. Durch das Steuergerät wird in Abhängigkeit von dem gewünschten Vortrieb eine Einbremsdrehzahl bestimmt, der ein Motordrehzahlverlauf zugeordnet ist. Durch das Steuergerät wird außerdem eine Motordrehzahländerung aus der Differenz der aktuellen Motordrehzahl und der Motordrehzahl, die im Motordrehzahlverlauf für den anstehenden Regelzyklus angegeben ist, bestimmt und diese Motordrehzahländerung wird dem Regelkreis als Sollwert vorgegeben. Der Anfahrvorgang erfolgt nur motordrehzahlorientiert, als Stellgröße des Algorithmus ist ein Aktorstrom festgelegt und eine Beeinflussung des Motormomentes ist nicht vorgesehen. Es wird auch kein definierter Verlauf des für die Beschleunigung verfügbaren Antriebsmoment erreicht, und eine Koordinierung zwischen dem Verlauf des Motor- und des Kupplungsmomentes findet nicht statt.

Bei einem bekannten Verfahren zur Anfahrsteuerung eines Kraftfahrzeugantriebes (DE 44 09 122 A),bestehend aus einer Antriebs maschine und einer Anfahreinrichtung, werden zur Anfahrsteuerung die Größen Stellung des Leistungssteuerorgans der Antriebsmaschine, Eingangsdrehzahl und Ausgangsdrehzahl der Anfahreinreichung herangezogen und es wird der Anfahrvorgang in zwei Phasen durchgeführt. In einer ersten Phase wird die Eingangsdrehzahl zu einer Solldrehzahl hingeführt, in einer sich anschließenden zweiten Phase wird ein aus der Differenz zwischen Eingangsdrehzahl und Ausgangsdrehzahl gebildetes Differenzdrehzahlsignal einem Sollverlauf bis zum Wert null nachgeführt. Der Anfahrvorgang wird nicht über das Motordrehmoment gesteuert.

Eine ebenfalls bekannte Steuerung für den Antriebsstrang eines Kraftfahrzeugs (EP 1 078 805 A) weist eine Erkennungsschaltung auf, durch die die jeweilige Fahrsituationen des Kraftfahrzeugs und die Fahrercharakteristik ermittelt werden. Eine Steuereinrichtung für die Kupplung wird beim Anfahren des Kraftfahrzeugs an die ermittelte Fahrsituation und/oder Fahrercharakteristik adaptiv angepasst. Durch die Steuereinrichtung werden beim Anfahren des Kraftfahrzeugs an die Motorsteuerung Signale übermittelt, mit denen die Motordrehzahl nach gespeicherten Kennlinien gesteuert wird. Die Erkennungsschaltung ist als Fuzzylogikrechner oder -regler ausgebildet und Bestandteil einer Schaltsteuerung.

Bei einer weiteren bekannten Steuerung (die gattungsbildende EP-A 0 328 299) für den Anfahrvorgang eines AMT-Systems, d.h. eines Kraftfahrzeug-Antriebsstrangs mit einem automatisierten Schaltgetriebe, wird aus der Betätigung des Fahrpedals (des Drosselventils) oder des gemessenen Motordrehmoments eine Motor-Zieldrehzahl bestimmt. Die Kraftstoffzufuhr für den Motor wird dann so gesteuert, dass die Motordrehzahl schnell die Zieldrehzahl erreicht und dann auf dieser Zieldrehzahl gehalten wird. Die Kupplung wird mit einer ersten, langsamen Geschwindigkeit oder mit einer zweiten, relativ hohen Geschwindigkeit eingerückt, und zwar abhängig von dem Verhältnis von Motor drehzahl zu Zieldrehzahl und von der Kraftstoffmenge oder der zeitlichen Änderung des dem Motor zugeführten Kraftstoffs. Die erste Einrückgeschwindigkeit hängt direkt von der Auslenkung des Fahrpedals oder dem Ausgangdrehmoments des Motors ab. Da als primärer Steuerparameter die schnelle Reaktion des Systems auf Änderung der Kraftstoffzufuhr zum Motor dient, muss die Kupplung zum Steuern des Anfahrvorgangs nicht entlastet oder langsamer eingerückt werden. Sobald die Kupplung ganz eingerückt ist, wird das Steuern der Kraftstoffzufuhr wieder dem Fahrer überlassen.

Der Erfindung liegt die Aufgabe zu Grunde, ein Verfahren zum Steuern eines Drehmoments, das beim Anfahren eines Kraftfahrzeugs von der Kupplung übertragen wird, zu schaffen, das die Nichtlinearitäten der Stromregelung und der Reibcharakteristik der Kupplung kompensiert.

Diese Aufgabe wird erfindungsgemäß durch ein Verfahren nach Anspruch 1 gelöst. Durch eine Motorsteuerung werden Signale zum Steuern von Sollwerten für das Motormoment erzeugt und durch ein Anfahralgorithmus wird zusätzlich eine Anfahrcharakteristik des Kraftfahrzeugs, durch die die Schnelligkeit bestimmt wird, mit der das Antriebsmoment zu dem von dem Fahrer des Kraftfahrzeugs gewünschten Antriebsmoment hin geführt wird, ausgewertet und zum Erzeugen der Steuersignale verwendet. Zusätzlich wird der Sollwert für das Motormoment aus einem Vorsteuerungsanteil zur Kompensation des Lastmoments der Kupplung und für die Drehzahländerung der trägen Masse des Motors und aus einem Regelanteil für die Einstellung der Motorsolldrehzahl zusammengesetzt.

Zweckmäßige Weiterbildungen der Erfindung sind in den Unteransprüchen niedergelegt.

Die Vorteile der Erfindung liegen insbesondere darin, dass ein definierter Verlauf des für die Beschleunigung verfügbaren Antriebsmoment erreicht wird. Die genannten Nichtlinearitäten werden durch eine hierarchische Struktur des Verfahrens ursachenorientiert kompensiert.

Ausführungsbeispiele der Erfindung werden im folgenden anhand der Zeichnung erläutert. Es zeigen:

Figur 1    eine Modelldarstellung des Antriebsstranges eines Kraftfahrzeuges, in dem das Verfahren gemäß der Er-findung durchgeführt wird;

Figur 2    Signalflüsse zwischen einem Anfahralgorithmus und einer Regelstrecke eines Antriebsstrangs gemäß Fi- gur 1;

Figur 3 ein Struktogramm des Algorithmus aus Figur 2;

Figur 4 ein die Ermittlung des Antriebsmoments aus der An- fahrcharakteristik und dem Wunschmoment verdeutlichendes Schema;

Figur 5 eine Darstellung des Verlaufs des Antriebsmoments für unterschiedliche Fahrerwunschmomente;

Figur 6 ein Diagramm zur Ermittlung des Motordrehzahlver- laufs aus dem Motorkennfeld;

Figur 7 ein Diagramm zur Ermittlung der Momentensicherheit aus dem Motorkennfeld;

Figur 8 ein Diagramm zur Berechnung des Motorsollmoments und der Korrektur des Kupplungssollmoments;

Figur 9 eine schematische Darstellung von Systemgrößen zur Richtungsdefinition;

Figur 10 eine Darstellung des bei einem Anfahrvorgang wün- schenswerten Drehzahlverlaufs und

Figur 11 eine Darstellung des bei einem Anfahrvorgang wün- schenswerten Drehmomentenverlaufs.

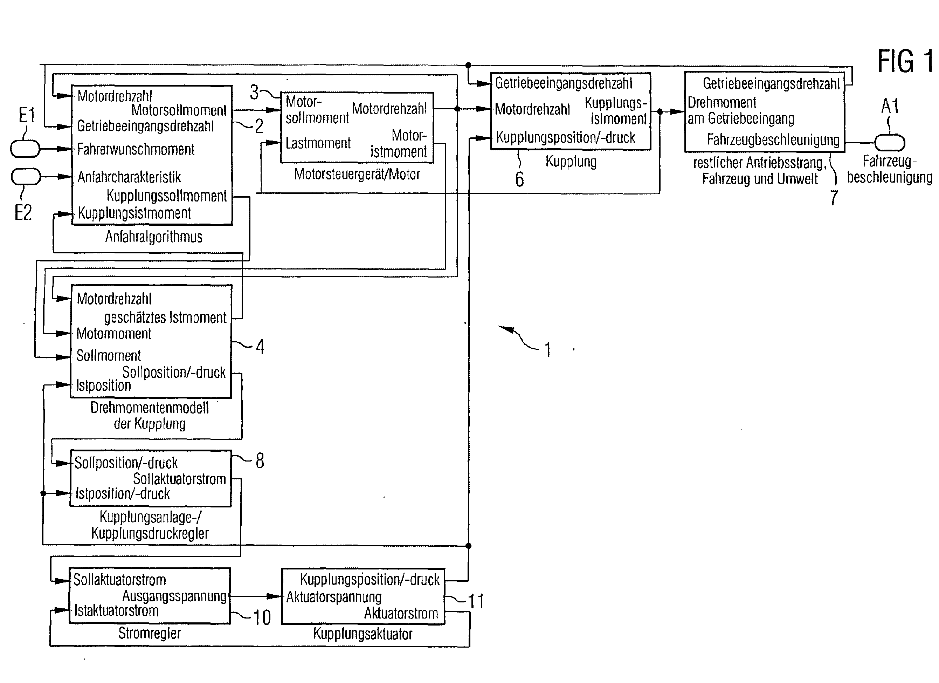

Ein Blockdiagramm eines Antriebsstrangs 1 (Figur 1) schließt folgenden Blöcke ein, die einerseits körperliche Bestandteile und andererseits Steuerprogrammbestandteile des Antriebsstrangs darstellen (der Ausdruck Block wird nicht laufend wiederholt).

Ein Block Anfahralgorithmus 2 empfängt über einen Signaleingang E1 ein Fahrerwunschmoment, das heißt ein von dem Fahrer des Kraftfahrzeugs gewünschtes Antriebsmoment, das zu einem entsprechenden Vortrieb des Kraftfahrzeugs führt. Über einen Signaleingang E2 empfängt es eine von dem jeweiligen Kraftfahrzeug und weiteren Größen abhängige Anfahrcharakteristik, auf die noch eingegangen wird. Der Block 2 wertet diese Eingangsgrößen aus und übermittelt einerseits an einen Block, der eine Motorsteuerung 3 und den zugehörigen Motor darstellt, einen Sollwert des Motordrehmoments (im folgenden kurz als Motormoment bezeichnet). Andererseits übermittelt er an ein Drehmomentmodell 4 der Kupplung einen Sollwert des Kupplungs(dreh)moments.

Die Motorsteuerung 3 liefert den Wert der Motordrehzahl an eine Kupplung 6 und den Istwert des Motormoments an das Drehmomentmodell 4. Von der Kupplung 6 wird des Istwert des Kupplungsmoments auf die weiteren Bestandteile 7 des Antriebsstrangs und damit an das Kraftfahrzeug und die Fahrbahn übertragen. Diese weiteren Bestandteile Getriebe, Kardanwelle usw. werden hier nicht dargestellt, da sie allgemein bekannt sind und durch die Erfindung nicht verändert werden. In dem Blockdiagramm oder Modell des Antriebsstrangs 1 wird die sich ergebende Fahrzeugbeschleunigung als an einem Ausgang A1 ausgegeben dargestellt.

Das Drehmomentmodell 4 der Kupplung übermittelt an einen Kupplungsregler 8, der entweder als Kupplungslageregler oder als Kupplungsdruckregler ausgebildet ist, einen Sollwert für die Position oder für den Druck der Kupplung. Daraus erzeugt der Kupplungsregler einen Sollaktuatorstrom und übergibt ihn an einen Stromregler 10. Dieser ermittelt aus dem Sollaktuatorstrom und einem rückgeführten Istaktuatorstrom eine Ausgangsspannung, die als Aktuatorspannung an einen Kupplungsaktuator gelegt wird. Der Austausch weiterer Signale und physikalischer Größen zwischen den Bestandteilen des Antriebsstrangs 1 wird in der Zeichnung durch Verbindungslinien mit Richtungspfeilen verdeutlich und ergibt sich auch aus der nachfolgenden Beschreibung.

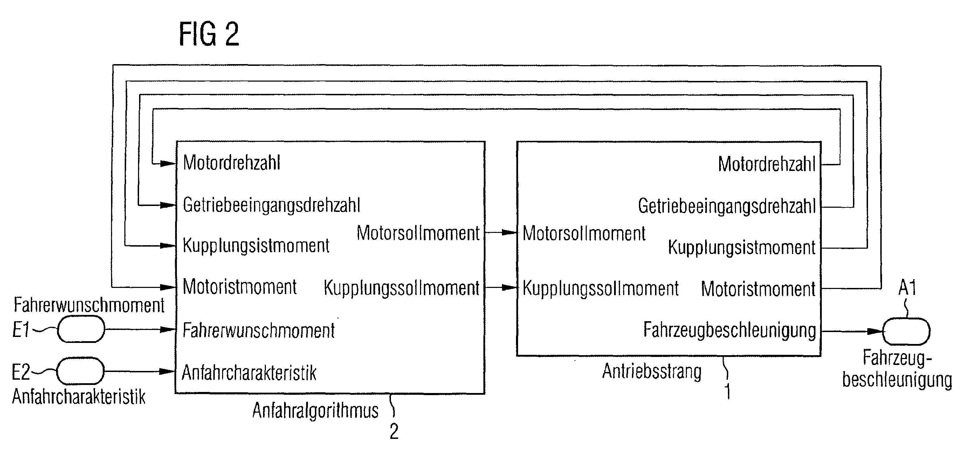

Figur 2 veranschaulicht die Wechselwirkungen und Signalflüsse zwischen dem Anfahralgorithmus 2 und der ihm zugrunde liegenden Regelstrecke, die durch den Antriebsstrang 1 mit seinen Aktuatorik-Baugruppen, Sensoren und elektronischen Steuergeräten, der Fahrzeug- und gegebenenfalls der Anhängermasse, sowie den Umwelteinflüssen wie Steigung oder Gefälle der Straße und dem Reibwert zwischen Reifen und Fahrbahn gebildet wird.

Zur Realisierung eines erfindungsgemäß optimierten Anfahrvorgangs werden folgende Eingangs und Ausgangsgrößen verwendet, die die Schnittstellen des Anfahralgorithmus bilden:

Eingangsgrößen: Fahrerwunschmoment, Motordrehzahl, Getriebeeingangsdrehzahl, Anfahrcharakteristik, Kupplungsistmoment (optional) und Motoristmoment Ausgangsgrößen: Kupplungssollmoment und Motorsollmoment

Moderne Motorsteuergeräte mit E-Gas (elektronischem Fahrpedal) führen üblicherweise eine Fahrpedalinterpretation durch, bei welcher aus der Fahrpedalstellung und eventuell noch weiteren Größen das sogenannte Fahrerwunschmoment berechnet wird. Dieses Moment ist im Regelfall auf Motor und Getriebeeingang bezogen und ist proportional zur gewünschten und möglichen Fahrzeugbeschleunigung. Für den Fall, dass diese Größe nicht verfügbar sein sollte, wird das Fahrerwunschmoment ersatzweise durch eine Kennfeldinterpolation ermittelt, wobei Eingangsgrößen des Kennfeldes ein Fahrpedalwert in Prozent und die Motordrehzahl sind.

Die Anfahrcharakteristik bestimmt zum einen die Schnelligkeit, mit der das Antriebsmoment zu dem Fahrerwunschmoment hin geführt wird, und zum anderen das Motordrehzahlniveau - und damit auch, ob der Anfahrvorgang eher verbrauchsoptimiert oder eher leistungsoptimiert erfolgt. Wegen dieser zwei Eingriffsmöglichkeiten können anstelle der Kombinationsgröße Anfahrcharakteristik auch separate Eingangssignale für die Schnelligkeit der Antriebsmomentenführung einerseits und für das Motordrehzahlniveau andererseits eingesetzt werden. Im vorliegenden Ausführungsbeispiel wird die Verwendung der Kombinationsgröße Anfahrcharakteristik eingehend erläutert.

Die Anfahrcharakteristik kann sowohl in einem externen Modul der Antriebstrangssteuerung (zum Beispiel einem Fahrstrategiemodul), das an den Signaleingang E1 angeschlossen ist, oder auch in dem Anfahrmodul selbst kontinuierlich bestimmt werden. Im einfachsten Fall kann sie auch nach den Vorstellungen des Fahrzeugherstellers fest eingestellt sein.

Das Signal Anfahrcharakteristik ist eine normierte Größe, deren Wert kontinuierlich zwischen einem Minimalwert (z.B. 0 oder 0,0%) und einem Maximalwert (z.B. 1 oder 1000 oder 100,0%) variierbar ist. Dieses Eingangssignal erlaubt die Art des Anfahrvorgangs situationsabhängig stufenlos von betont komfortablem Anfahren mit niedrigem Motordrehzahlniveau und damit niedriger Kupplungsbelastung bei besonders leichter Dosierbarkeit bis hin zu einem betont sportlichen Anfahren mit schnellerem Momentenaufbau und höherem Motordrehzahlniveau einzustellen.

Zum Festlegen der aktuellen Anfahrcharakteristik dienen folgende Eingangs- und Ausgangsgrößen:

Eingangsgrößen:

- Fahrertyp (sportlich <-> komfortorientiert)
- Reibwert zwischen Fahrbahn und Reifen (durch trockene, staubige, feuchte, nasse, schnee- oder eisglatte Fahrbahn)
- Fahrbahnsteigung
- Fahrbahnkrümmung
- Fahrzeugbeladung und Anhängerlast
- Fahrsituation (normale Anfahrt, Rennstart, Rangieren, Stop-and-go)
- Voreinstellung eines Fahrprogramms mittels Wählschalter oder Betriebsartentaste (z.B. Eco, Sport, Komfort, Winter, City-Modus, Lastentransport, Off-Road)
- Kupplungsreibbelagstemperatur / Kupplungsbelastung
- Kupplungsverschleiß
- weitere Signale vom Antiblockiersystem (ABS) und der Traktionskontrolle (z.B. ASR)

Ausgangsgrößen:

- Motordrehzahlniveau bzw. Höhe der Motordrehmomentesreserve
- Schnelligkeit der Antriebsmomentenführung

Die Feinabstimmung der Anfahrcharakteristik und damit das Fahrgefühl beim Anfahren stellt ein wichtiges Qualitätsmerkmal dar und wird daher in Absprache mit dem Fahrzeughersteller durchgeführt. Zur eindeutigen Bestimmung der Ausgangsgrößen aus den Eingangsgrößen, die durchaus konträre Empfehlungen für die Ausgangsgrößen liefern können, wird ein Fuzzy-System verwendet.

Dazu werden die Eingangsgrößen als sogenannte linguistische Variablen mit zugehörigen linguistischen Werten aufgefasst. Beispiele sind:

| Linguistische Variable | Linguistischer Werte |
| --- | --- |
| Fahrertyp | komfortorientiert, normal, sportlich |
| Reibwert | sehr_gering, gering, mittel, hoch, sehr_hoch |
| ... | ... |

Nachdem derart eine Fuzzifizierung der Eingangsgrößen durchgeführt worden ist, wird das beabsichtigte Anfahrverhalten mit einer Fuzzy-Regelbasis beschrieben. Die Regelbasis schließt folgende Fuzzy-Regeln ein:

WENN Fahrertyp==sportlich UND Reibwert==sehr_hoch UND Kupplungsreibbelagstemperatur==normal UND Kupplungsverschleiß!=hoch DANN Anfahrcharakteristik==sehr_hoch

WENN (Fahrprogramm==Eco ODER Fahrsituation==Rangieren ODER Reibwert==gering ODER Fahrbahnkrümmung==stark) UND Fahrertyp==komfortorientiert DANN Anfahrcharakteristik==niedrig

etc.

Der Erfülltheitsgrad der einzelnen Regeln der gesamten Regelbasis und deren Empfehlungen werden anschließend ausgewertet und zusammengefasst. Nach der Defuzzifizierung dieses Ergebnisses erhält man einen konkreten Zahlenwert für die Ausgangsgröße. Der Formalismus der Fuzzy-Logik an sich ist allgemein bekannt.

Das Motoristmoment wird standardmäßig von der Motorsteuerung bereitgestellt und stellt das am Kupplungseingang (motorseitig) verfügbare Antriebsmoment dar.

Das Kupplungsistmoment ist das von der Kupplung übertragene Drehmoment. Es ist derzeit nur relativ aufwendig zu messen und wird daher hier über ein Rückrechnen aus einer Zustandsgröße oder Messgröße der Kupplung (zum Beispiel der Kupplungsposition, dem Arbeitsdruck oder der Anpresskraft der Kupplung) unter Nutzung eines einstellbaren charakteristischen Kennfeldes ermittelt, wobei zusätzliche Effekte wie etwa die Temperatur oder der Verschleißgrad der Kupplungsbeläge einbezogen werden.

Das Kupplungssollmoment stellt das gewünschte, von der Anfahrkupplung übertragbare Drehmoment dar. Dieses wird mit unterlagerten Funktionen, die auf die Realisierungsform des Aktuators abgestimmt sind, in an sich bekannter Weise in eine Stellgröße für den Kupplungsaktuator umgerechnet.

Das Motorsollmoment stellt die vom Anfahralgorithmus 2 berechnete Vorgabe für das von einem Antriebsstrang am Kupplungseingang (motorseitig) zu liefernde effektive Drehmoment dar. Diese Vorgabe wird von der elektronischen Motorsteuerung 3 oder - im Falle zusätzlich nutzbarer Antriebsquellen wie bei einem Hybridfahrzeug - von einem Antriebsstrangmanagementsystem in bekannter Weise durch Regeln des Motors umgesetzt. Die Motordrehzahl wird im vorliegenden Ausführungsbeispiel durch Vorgabe eines Motorsollmomentes eingestellt. Sie kann allerdings in der Motorsteuerung mit deren spezieller Systemkenntnis effektiver eingestellt werden. Falls also eine Systemschnittstelle für eine Drehzahlvorgabe zur Verfügung steht, ist sie zweckmäßiger Weise zu nutzen. An diese wird zudem das Kupplungsistmoment übermittelt, um eine exaktere Vorsteuerung zu ermöglichen.

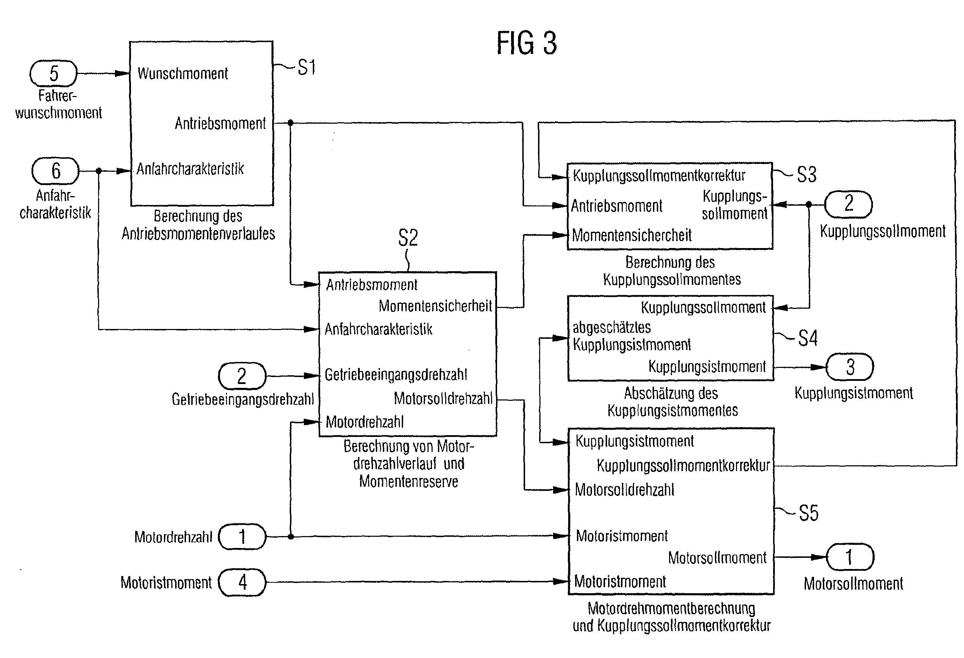

Das Verfahren zum Steuern eines Drehmoments beim Anfahren schließt folgende aus Figur 3 ersichtliche Berechnungsschritte **S1** bis **S5** ein:

**S1** - Berechnung des Antriebsmomentenverlaufes:

Zum Berechnen des Antriebsmomentenverlaufes am Getriebeeingang werden die beiden Eingangsgrößen Fahrerwunschmoment und Anfahrcharakteristik verwendet. Das Fahrerwunschmoment dient hierbei als Zielgröße für den stationären Endwert des Antriebsmomentes. Die Anfahrcharakteristik bestimmt die Schnelligkeit der Antriebsmomentenführung. Bei kleinem Wert der Anfahrcharakteristik wird das Antriebsmoment eher langsam in Richtung Fahrerwunschmoment geführt und bei großen Werten entsprechend schneller.

Die Form der Antriebsmomentenführung ist einstellbar. Es werden folgende Varianten unterschieden, die jeweils für positive und negative Antriebsmomentenänderungen getrennt abstimmbar sind:

a) lineare Antriebsmomentenführung: Das Antriebsmoment wird mit interpolierten Drehmomentgradienten, die aus einer einstellbaren Kennlinie in Abhängigkeit von der Anfahrcharakteristik ermittelt werden, auf das Fahrerwunschmoment hin geführt.

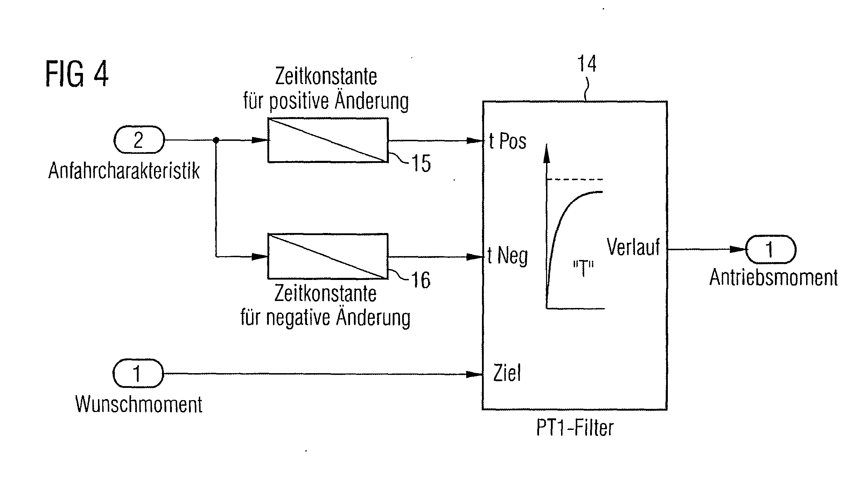

b) Filterung mit einer Übertragungsfunktion erster oder zweiter Ordnung (PT1- oder PT2-Filter): Die Zeitkonstanten T des Filters 14 (Figur 4) werden durch Interpolation einer Kennlinie in Abhängigkeit von der Anfahrcharakteristik bestimmt.

Bei einer hohen Dynamik (der Anfahrcharakteristik) ist die Zeit zum Einstellen des Zielwertes (das heißt des aktuellen Fahrerwunschmoments) kürzer als bei geringerer Dynamik. Die Verwendung von separaten Zeitkonstanten 15, 16 für eine positive beziehungsweise negative Fahrerwunschmomentänderung ermöglicht es:

♦ die Dosierbarkeit des Antriebsmomentes durch das Fahrpedal zwischen sportlich und komfortabel fein abzustimmen;

♦ Antriebsstrangschwingungen auch bei abrupter Zurücknahme des Fahrpedals (und somit des Fahrerwunschmomentes) zuverlässig zu verhindern, und

♦ dabei einen nahezu direkten Durchgriff des Fahrers auf die Fahrzeugdynamik, abgestimmt auf das reale Systemverhalten (das heißt auf System innewohnende Verzögerungen) beizubehalten.

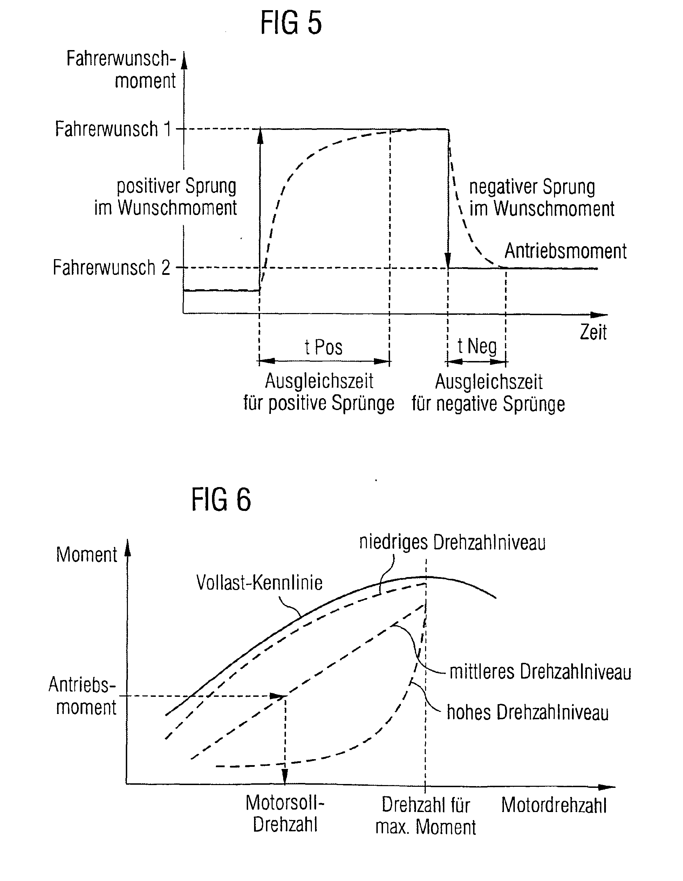

Der aus Figur 5 ersichtliche Verlauf des Antriebsmoments wird mit einer PT1-Übertragungsfunktion berechnet. Für das Fahrerwunschmoment wird hier der Extremfall einer Sprungvorgabe angenommen. Für einen positiven Sprung des Fahrerwunschmomentes auf einen Fahrerwunsch 1 ergibt sich eine Zeit bis zum Erreichen des stationären Endwertes, die größer ist als die Zeit bei einem negativen Sprung des Fahrerwunschmoment auf einen Fahrerwunsch 2. Die jeweilige Filter-Zeitkonstante wird für beide Fälle aus unterschiedlichen einstellbaren Kennfeldern - abhängig von der Anfahrcharakteristik - ausgelesen.

Als Grundlage für die Ermittlung des Motordrehzahlverlaufs und der Reserve des zur Beschleunigung nutzbaren Motordrehmomentes (Momentenreserve) dient das Motorkennfeld des vorliegenden Antriebs.

**S2** - Berechnung des Motordrehzahlverlaufs und der Momentenreserve:

Die Anfahrfunktion kann sich je nach Charakteristik in tendenziell niedrigen Drehzahlbereichen (eher verbrauchsoptimal) oder in tendenziell höheren Drehzahlbereichen für höhere Leistungswünsche durchführen lassen, und zwar so lange die Motordrehzahl noch für die Bereitstellung des angeforderten Momentes ausreicht. Ein Drehmoment lässt sich mit jeder beliebigen Drehzahl zwischen der Vollastkennlinie und der Drehzahl für die Bereitstellung des maximalen Momentes darstellen (Figur 6).

Für geringe Leistungswünsche wird ein niedriges Drehzahlniveau gewählt und für hohe Leistung ein höheres Drehzahlniveau. Dementsprechend lassen sich verschiedene Drehzahltrajektorien darstellen, die während des Anfahrvorgangs bei gegebener Anfahrcharakteristik in dem Motorkennfeld bis zum Fahrerwunschmoment durchlaufen werden. In der Zeichnung ist neben einer Trajektorie für ein niedriges und eine für ein hohes Drehzahlniveau auch eine für ein mittleres Drehzahlniveau dargestellt.

Die Motorsolldrehzahl ergibt sich jetzt mit dem Antriebsmoment und der Anfahrcharakteristik als Eingangsgrößen durch Interpolation aus der zugehörigen Motordrehzahltrajektorie des Motorkennfeldes. Begrenzt werden die Motorsolldrehzahlen von der Vollastkennlinie und von der Drehzahl für das maximale Motormoment. Oberhalb der Vollastkennlinie ist der Motor nicht mehr fähig, das geforderte Motormoment zu liefern.

Höhere Drehzahlen als die für maximales Moment bringen entweder Momenteneinbußen oder erhöhen das Motormoment nicht weiter. Die so ermittelte Motordrehzahl wird anschließend mit der aktuellen Getriebedrehzahl verglichen, um sicherzustellen, dass nie eine Motorsolldrehzahl ausgegeben wird, die kleiner als die aktuelle Getriebeeingangsdrehzahl ist.

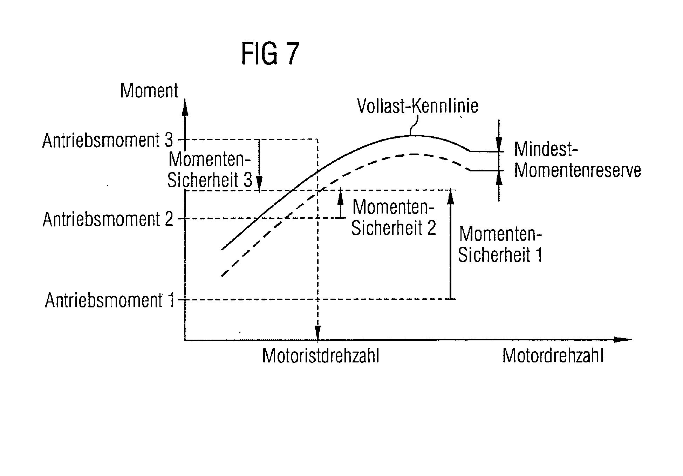

Die Ermittlung der Momentenreserve (Momentensicherheit) wird anhand von Figur 7 erläutert. Die Fähigkeit eines Motors sich selbst und damit bei Drehmoment übertragender Kupplung auch das Fahrzeug zu beschleunigen, hängt von der Reserve an verfügbarem Motordrehmoment ab, die ihn bei gegebener Motoristdrehzahl von der Vollbelastung (Volllast) trennt. Dabei bedeutet Volllast, dass das Antriebsmoment und damit die aktive Fahrzeuggeschwindigkeit gerade noch konstant gehalten werden kann, oder dass sie bei gering höherer Last (Berg, Luftwiderstand) sofort zurückgeht, das heißt einen Drehzahleinbruch verursacht, der mit einem Komfortverlust verbunden ist. Um solche Einbrüche beim Anfahren zu vermeiden sollte die Vollastkennlinie immer um einen einstellbaren Wert unterschritten werden, womit eine Mindestmomentenreserve vorgehalten wird. Außerdem lassen sich damit Drehzahlerhöhungen bei größerer Momentenreserve mit größerer Dynamik realisieren.

Es gilt die Beziehung:

$$\text{Momentensicherheit} = \text{Vollastmoment (Motorist-} \qquad \text{(Gl.1)}$$
$$\text{drehzahl)} - \text{Mindestmomentenreserve} - \text{Lastmoment}$$

Aus dem aktuellen Antriebsmoment (Lastmoment der Kupplung) und der Istdrehzahl des Motors wird die zur Verfügung stehende Momentenreserve berechnet. Wird eine Mindestreserve vorgehalten, so ergibt sich eine definierte Momentensicherheit.

- Fall 1: Ist diese Momentenreserve ausreichend groß, lässt sich eine Drehzahl auch bei Erhöhung des Lastmoments halten und ein Fahrzeug kann mit oder ohne Drehzahlerhöhung am Motor weiter beschleunigt werden. Dabei ist eine sehr dynamische Drehzahlerhöhung möglich, da die Last im Vergleich zum verfügbaren Motormoment gering ist.
- Fall 2: Fällt die Reserve geringer aus, besteht zumindest die Gefahr, dass die Motordrehzahl gedrückt wird (unerwünschter Drehzahlabfall), und der Motor hat nur ein geringes Beschleunigungsvermögen für das Fahrzeug und sich selbst, da der hohe Lastanteil am verfügbaren Gesamtmoment dem entgegen steht.
- Fall 3: Ist die Momentenreserve negativ, so ist der Motor nicht mehr fähig, die Drehzahl zu halten, und mit fallender Motordrehzahl nimmt das Motordrehmoment noch weiter ab. Spätestens beim Übergang vom schlupfenden zum haftenden Zustand der Kupplung treten dann unerwünschte Einbußen an verfügbarem Antriebsmoment auf und es erfolgt ein wenig komfortables Anfahren.

**S3** - Berechnung des Kupplungssollmomentes

Das Kupplungssollmoment wird folgendermaßen bestimmt und erforderlichenfalls korrigiert:

$$M_{KupSoll} = M_{Antrieb} + M_{KorrMotorReserve} + M_{KorrKupIst} \qquad \text{(Gl.2)}$$

darin sind:

M$_{KupSoll}$        das Kupplungssollmoment

M$_{Antrieb}$        das Antriebsmoment

M$_{KorrMotor\,Re\,seve}$     die von der Motormomentensicherheit abhängige Drehmomentkorrektur

M$_{korrKupIst}$      die von der Kupplungsistmomentschätzung abhängige Drehmomentkorrektur

Somit beobachtet der Algorithmus die verfügbare Momentenreserve des Motors und dessen Tendenz und reagiert mit Korrekturen nach folgendem Schema:

- Fall 1: Die Momentensicherheit und die Tendenz liegen oberhalb der einstellbaren kritischen Toleranz → kein korrigierender Regelbedarf an der Kupplung.
- Fall 2: Die Momentensicherheit zeigt rückläufige Tendenz, liegt jedoch noch oberhalb kritischer Werte → Verringerung des Gradienten des Kupplungsmomentes.
- Fall 3: Die Momentensicherheit geht aus dem positiven Bereich gegen Null → Gradient des Kupplungsmomentes ist gleich Null (Wartefunktion).
- Fall 4: Die Tendenz führt zu negativer Momentensicherheit → Kupplungsmoment verringern: Dies ist ein Fehlerfall, der starke Abweichungen der gespeicherten Kupplungscharakteristik und/oder der Motorkennfelddaten gegenüber der Realität verrät. Für diesen Fall werden andere Algorithmen benötigt, die diese Abweichungen in die Kennfelder zurückfließen lassen (zum Beispiel in Form einer Lernfunktion, die jedoch nicht Bestandteil der vorliegenden Erfindung ist).

Bei der Motordrehmomentberechnung können Abweichungen des erwarteten Kupplungsistmomentes vom tatsächlichen Wert erkannt werden. Erfolgt die Abschätzung des Kupplungsistmomentes mit einer einfachen Übertragungsfunktion, kann ein entsprechender Korrekturwert direkt in die Sollvorgabe zurück geführt werden. Die entsprechenden Korrekturen können auch als bleibender Offset auf der Vorsteuerung bestehen bleiben. Wenn der Offset wieder abgebaut wird, geschieht dies mit Blick auf den Fahrzeugbeschleunigungsverlauf (stetiger Antriebsmomentenverlauf) sehr langsam, um unangenehme Effekte für den Fahrkomfort zu vermeiden.

**S4** - Abschätzung des Kupplungsistmomentes

Die Kapazität der Reibkupplung ein Moment (das Kupplungsistmoment) zu übertragen, bestimmt im Schlupfbereich unmittelbar das am Antriebsrad vorliegende Drehmoment. Dieses Moment kann im Regelfall nicht direkt gemessen werden, weshalb verschiedene Ersatzverfahren zur Ermittlung denkbar sind.

Zur Feststellung des Kupplungsistmomentes bestehen wahlweise folgende Möglichkeiten:

- a) Das Kupplungsistmoment entweder durch Messen einer charakteristischen Größe (z. B. Position, Druck) zu errechnen oder es durch eine modellbasierte Berechnung zu ermitteln, oder aber
- b) Durch eine Übertragungsfunktion erster oder zweiter (eventuell auch noch höherer) Ordnung aus dem Kupplungssollmoment ein Kupplungsistmoment bei Kenntnis des Kupplungsverhaltens zu schätzen.

Allen Varianten ist gemeinsam, dass der Einfluss der Umgebungsbedingungen (z.B. Temperatur, Verschleißgrad) zum Berechnen der aktuell vorhandenen übertragbaren Kupplungsmomentes mit herangezogen werden muss.

**S5** - Berechnung des Motordrehmoments

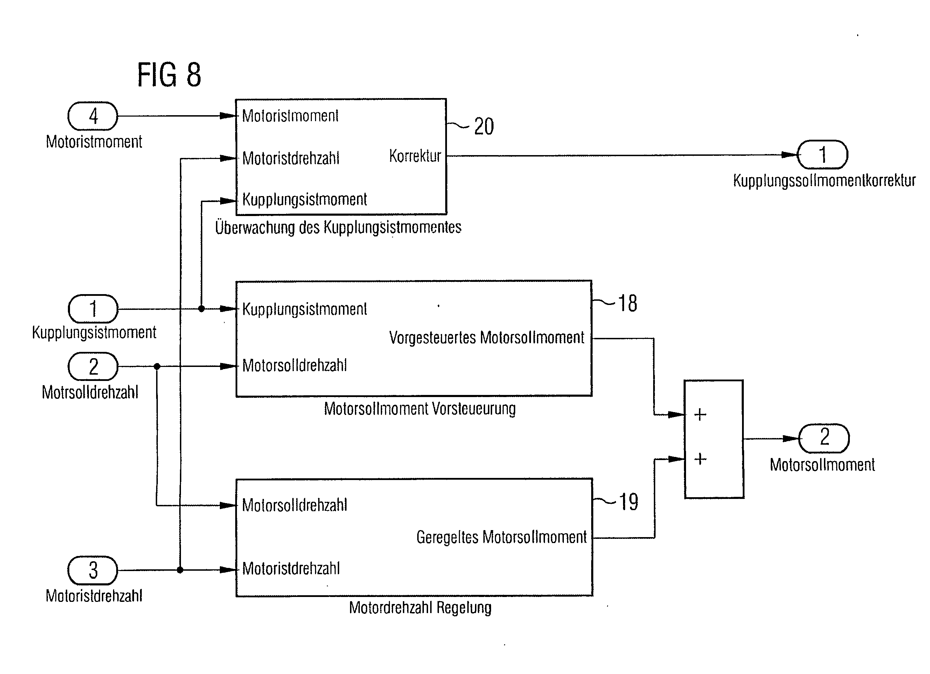

Zum Bereitstellen der von dem Fahrer gewünschten Vortriebskraft beim Anfahren ist ein entsprechendes Motormoment $M_{motSoll}$ notwendig. Dieses wird als Sollvorgabe an die Motorsteuerung übermittelt. Dieses Motorsollmoment setzt sich einerseits aus einem Vorsteuerungsanteil - 18 in Figur 8 - zur Kompensation des Lastmoments der Kupplung und für die Drehzahländerung der trägen Masse des Motors und andererseits aus einem Regelanteil - 19 in Figur 8 - für die Einstellung der Motorsolldrehzahl zusammen:

$$M_{MotSoll} = M_{MotSoll,Vorst} + M_{MotSoll,Reg} \qquad (Gl.3)$$

Die Vorsteuerung basiert auf der Bewegungsgleichung des Motors:

$$\Theta_{Mot} \cdot \dot{\omega}_{MotIst} = M_{MotIst} + M_{KupIst} \qquad (Gl.4)$$

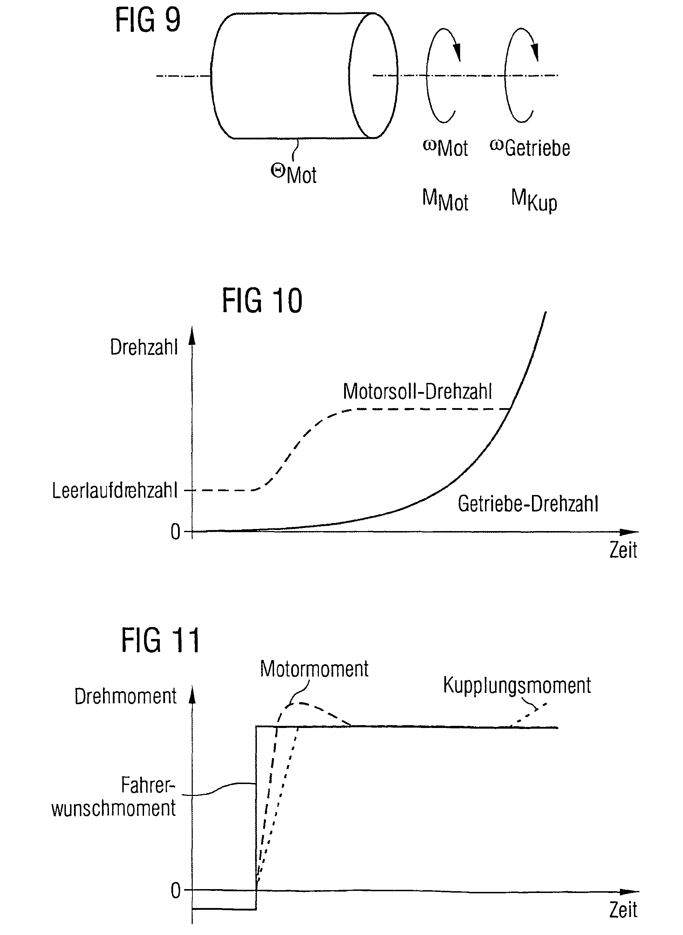

Die Bedeutung der Variablen dieser Gleichung ist weiter unten aufgelistet. Die Festlegung der Vorzeichen der Variablen ist aus Figur 9 ersichtlich.

Der Vorsteueranteil des Motorsollmoments für eine Änderung der Motorsolldrehzahl ergibt sich aus folgender Gleichung:

$$M_{MotSoll,Vorst} = \Theta_{Mot} \cdot \frac{\omega_{MotSoll,aktuell} - \omega_{MotSoll,alt}}{\Delta T} - M_{KupIst} \qquad (Gl.5)$$

Für eine genaue Motordrehzahlführung wird parallel zur Vorsteuerung ein Regler (ein PID-Regler) eingesetzt, der im Block 19 gegebenenfalls statische oder dynamische Fehler der Vorsteuerung korrigiert. Die Übereinstimmung des Kupplungsistmomentes mit dem berechneten Kupplungssollmoment wird in einem Block 20 überwacht, der einen herkömmlichen PID-Regler enthält.

Um eine noch höhere Güte der Motordrehzahlführung zu erzielen, kann diese Funktion auch in der Motorsteuerung realisiert werden. Als Schnittstelle wird dann anstelle des Motorsollmomentes die Motorsolldrehzahl und das aktuell auf den Motor wirkende Lastmoment (Kupplungsistmoment + eventuell Drehmoment für weitere Verbraucher) an die Motorsteuerung übergeben.

Falls im Schritt **S4** eine Übertragungsfunktion zum Schätzen des Kupplungsistmomentes benutzt wird, wird zweckmäßigerweise eine eventuelle Differenz zu dem tatsächlich vorhandenen Kupplungsmoment in dem Block 20 überprüft. Dafür wird das aktuelle Kupplungsmoment aus dem Motoristmoment und der Motordrehzahl errechnet und mit dem zuvor berechneten Kupplungsistmoment verglichen. Die Differenz ergibt die notwendige Korrektur der Sollvorgabe in dem Schritt **S3** und wird an dessen Berechnung übermittelt. Diese Überwachung gewährleistet eine Reproduzierbarkeit der Anfahrvorgänge auch bei Schwankungen der Systemparametereigenschaften und ermöglicht es, die erkannte Abweichung zur Adaption der Systemparameter zu nutzen. Wenn das Kupplungsistmoment von einem externen Modell zur Verfügung gestellt wird, geschieht diese Korrektur zweckmäßigerweise außerhalb des Anfahralgorithmus.

Die Korrektur wird nach folgender Gleichung ermittelt:

$$M_{KorrKupIst} = M_{KupIst} - (\Theta_{Mot} \cdot \dot{\omega}_{MotIst} - M_{MotIst}) \qquad (Gl.6)$$

Die Bedeutung der Variablen oder Formelgrößen dieser und vorstehender Gleichungen ist folgende:

| | |
|---|---|
| $M_{KorrKupIst}$ | Drehmomentkorrektur abhängig von Kupplungsistmo- mentschätzung |
| $M_{KupIst}$ | geschätztes Kupplungsistmoment |
| $M_{KupIst}$ | Kupplungssollmoment |
| $\Theta_{Mot}$ | Motorträgheitsmoment |
| $\dot{\omega}_{MotIst}$ | Motorwinkelbeschleunigung (Istwert) |
| $\dot{\omega}_{MotSoll}$ | Motorwinkelbeschleunigung (Sollwert) |
| $M_{MotIst}$ | Motoristmoment |
| $M_{MotSolt}$ | Motorsollmoment |
| $M_{MotSoll\,Vorst}$ | Vorsteueranteil des Motorsollmoments |
| $M_{KotSoll.Reg}$ | Regelungsanteil des Motorsollmoments |
| $\Delta T$ | Zeitdifferenz zwischen aufeinanderfolgenden Be- rechnungszyklen |
| $\omega_{MotSoll,aktuell}$ | aktueller Sollwert der Motorwinkelgeschwindigkeit |
| $\omega_{MotSoll.alt}$ | Sollwert der Motorwinkelgeschwindigkeit aus dem vorhergehenden Berechnungszyklus |

Die Berechnung des Motordrehzahlverlaufes mit Hilfe des Motorkennfelds und der Anfahrcharakteristik ergibt mehrere Vorteile: einen minimalen Kupplungsverschleiß und ein niedriges Motorgeräuschniveau durch situationsgerecht niedrige Motordrehzahlen; einen optimierten Kraftstoffverbrauch durch Verwenden des Motorkennfeldes; eine Verringerung der Reibleistung durch ein an die Kupplungsbelastung anpassbares Motordrehzahlniveau; einen gleitenden Übergang zwischen einer (sich aus dem Motorkennfeld ergebenden) verbrauchs- und leistungsorientierten Motordrehzahltrajektorie.

Falls die Motorsteuerung dies unterstützt, kann die Motorsolldrehzahl und als Störgröße das geschätzte Kupplungsistmoment an sie ausgegeben werden. Zusätzlich ist eine Motordrehzahlanpassung im letzten Teil der Schlupfphase (Zieldrehzahlanhebung) und damit ein besonders weicher Übergang zwischen einem schlupfenden und einem haftenden Zustand der Kupplung möglich.

Die Berechnung des Antriebsmomentenverlaufes unter Einbeziehung der Anfahrcharakteristik ergibt ein gutes Anfahrverhalten auch bei unruhigem Fahrpedal oder einem Abbruch des Anfahrvorgangs (z.B. Stop-and-go-Fahrt). Die Weichheit des Anfahrens ist einstellbar (wichtig bei Winterbetrieb, Anfahren am Berg, Vorbelastung der Kupplung). Außerdem sind die Anfahreigenschaften gemäß dem Fahrertyp (zwischen weich und hart) einstellbar.

Die Führung des Motormomentes als eine Funktion des Fahrerwunschmoments und der Anfahrcharakteristik ermöglicht es, die Dynamik der Motormomentenführung im Sinne eines zuvor definierten optimalen Anfahrens zu beeinflussen. Das Motor- und das Kupplungsdrehmoment sind koordinierbar, und diese koordinierte Führung der beiden Drehmomente ergibt einen harmonischen Verlauf des Antriebsmoments unter Berücksichtigung der Dynamik von Motor und Kupplung.

Durch die momentenbasierte Regelung des Antriebsstrangs können Nichtlinearitäten in der Motor- und Kupplungsmomentenführung kompensiert werden. Eine Nutzung externer Antriebsmomentenquellen (wie etwa eines Kurbelwellenstartergenerators) wird ebenfalls ermöglicht.

Die Berücksichtigung der Motormomentenreserve ergibt einen harmonischen Verlauf der Fahrzeugbeschleunigung und der Motordrehzahl, das Anfahren erfolgt ohne Drehmomenteinbrüche und ohne Rucken. Durch den modellbasierten Algorithmus wird der Applikationsaufwand für den Antriebsstrang eines Kraftfahrzeugtyps erheblich verringert.

Die Stellgrößen des Anfahralgorithmus wirken auf die Komponenten des Antriebsstrangs und führen zu einer resultierenden Fahrzeugbeschleunigung.

Ein für einen Anfahrvorgang wünschenswerter Drehzahlverlauf ist aus Figur 10 ersichtlich. Dargestellt ist der zeitliche Verlauf der Motorsolldrehzahl (gestrichelte Linie) und der Getriebedrehzahl.

Ein für einen Anfahrvorgang wünschenswerter Drehmomentenverlauf ist aus Figur 11 ersichtlich. Dargestellt ist der zeitliche Verlauf des Fahrerwunschmoments, des Motormoments (starke gestrichelte Linie) und des Kupplungsmoments (feine gestrichelte Linie). Solche Verläufe werden mit dem erfindungsgemäßen Verfahren erreicht.

Das Motorsollmoment wird im Regelfall über den CAN-Bus des Fahrzeugs an das Motor- oder das Antriebsstrangsteuergerät weitergeleitet und im Zusammenspiel mit dem Verbrennungsmotor und gegebenenfalls einem Starter-Generator wird es in ein kupplungseingangsseitiges Antriebsmoment umgesetzt.

Das Kupplungssollmoment wird durch eine hierarchisch aufgebaute Kaskade, die durch die hintereinander geschalteten Blöcke 4, 8 und 10 aus Figur 1 gebildet wird, von unterlagerten Funktionen in die Stellgröße für den Kupplungsaktuator umgewandelt. In dem Block 4 wird die Sollposition oder der Solldruck des Aktuators 11 berechnet und die Nichtlinearitäten der Kupplungsmomentübertragung kompensiert. Im dem Block 8 werden die Nichtlinearitäten des Kupplungslage- oder Kupplungsdruckregelkreises kompensiert und der geeignete Aktuatorstrom berechnet. Und in dem Block 10 werden die Nichtlinearitäten des Stromregelkreises berücksichtigt und die geeignete Aktuatorausgangsspannung eingestellt. Nur durch diese hierarchisch aufgebaute Struktur von Funktionen gelingt eine genaue Führung des nur mit hohem Aufwand direkt messbaren Kupplungsmomentes.

Je nach Ausführung der Anfahrkupplung (Nass- oder Trockenkupplung) wird das Kupplungssollmoment mittels eines Kennfeldes in eine Kupplungssollposition bzw. einen Kupplungsdruck umgerechnet. Wie schon in Berechnungsschritt **S4** ("Abschätzung des Kupplungsistmomentes") ausgeführt, wird auch in dieser Unterfunktion über die Bewegungsgleichung des Verbrennungsmotors das momentane Kupplungsistmoment bestimmt, um bei unerwünschten Abweichungen zwischen Kupplungssoll- und Kupplungsistmoment gegebenenfalls die Stellgröße zu korrigieren.

Die beiden folgenden Funktionen der Kaskadenstruktur, nämlich der Kupplungszustandsregler, der als Kupplungslageregler im Fall einer Trockenkupplung oder als Kupplungsdruckreglers im Fall einer Nasskupplung ausgeführt ist, und die Stromregelung sind Gegenstand der folgenden nicht vorveröffentlichten Patentanmeldungen DE 10137581.6 bzw. DE 10211057.3.

**Patentansprüche**

1. Verfahren zum Steuern eines Drehmoments, das beim Anfahren eines Kraftfahrzeugs von einem Motor über eine automatisierte Kupplung auf das Getriebe übertragen wird, wobei die Motordrehzahl, das von dem Fahrer des Kraftfahrzeugs gewünschte Antriebsmoment, das Motoristmoment und die Getriebeeingangsdrehzahl ausgewertet werden und Signale zum Steuern von Sollwerten für das Motormoment ($M_{MotSoll}$) und das Kupplungsmoment

($M_{KpSoll}$) erzeugt werden,
**dadurch gekennzeichnet,**

- **dass** zusätzlich eine Anfahrcharakteristik des Kraftfahrzeugs, durch die die Schnelligkeit bestimmt wird, mit der das Antriebsmoment zu dem von dem Fahrer des Kraftfahrzeugs gewünschten Antriebsmoment hin geführt wird, ausgewertet und zum Erzeugen der Steuersignale verwendet wird, und
- **dass** der Sollwert für das Motormoment ($M_{MotSoll}$) aus einem Vorsteuerungsanteil ($M_{MotSoll\ Vort}$) zur Kompensation des Lastmoments der Kupplung und für die Drehzahländerung der trägen Masse des Motors und aus einem Regelanteil ($M_{MotSoll,Reg}$) für die Einstellung der Motorsolldrehzahl zusammengesetzt wird.

2. Verfahren nach Anspruch 1, **dadurch gekennzeichnet, dass** die Anfahrcharakteristik anhand einer Bewertung des Fahrerverhaltens und von Umgebungseinflüssen auf das Kraftfahrzeug ermittelt wird.

3. Verfahren nach Anspruch 1, **dadurch gekennzeichnet, dass** durch die Anfahrcharakteristik das Motordrehzahlniveau bestimmt wird.

4. Verfahren nach Anspruch 1, **dadurch gekennzeichnet, dass** die Vorsteuerung anhand folgender Bewegungsgleichung des Motors

$$\Theta_{Mot} \cdot \omega_{MotIst} = M_{MotIst} + M_{KupIst}$$

durchgeführt wird, worin $\Theta_{Mot}$ das Motorträgheitsmoment, $\omega_{MotIst}$ der Istwert der Motorwinkelbeschleunigung, $M_{motIst}$ das Motoristmoment und $M_{KupIst}$ das geschätzte Kupplungsistmoment sind.

5. Verfahren nach Anspruch 1, **dadurch gekennzeichnet, dass** aus dem aktuellen Antriebsmoment und der Istdrehzahl des Motors eine zur Verfügung stehende Momentenreserve berechnet wird.

6. Verfahren nach Anspruch 1, **dadurch gekennzeichnet, dass** das Kupplungssollmoment nach folgender Beziehung bestimmt wird:

$$M_{KupSoll} = M_{Antrieb} + M_{KorrMotor\,Reserve} + M_{KorrKupIst}$$

worin

$M_{KupSoll}$ das Kupplungssollmoment,
$M_{Antrieb}$ das Antriebsmoment,
$M_{KonMotorReserve}$ die von der Motormomentensicherheit, abhängige Drehmomentkorrektur und
$M_{KonKupIst}$ die von der Kupplungsistmomentschätzung abhängige Drehmomentkorrektur

sind.

7. Verfahren nach Anspruch 1, **dadurch gekennzeichnet, dass** ein Kupplungsistmoment mit einer Übertragungsfunktion erster oder zweiter Ordnung aus dem Kupplungssollmoment bei Kenntnis des Kupplungsverhaltens geschätzt wird.

8. Verfahren nach Anspruch 1, **dadurch gekennzeichnet, dass** die Ausgangsgrößen der Anfahrcharakteristik mit einem Fuzzy-System aus den Eingangsgrößen berechnet werden.

**Claims**

1. Method for controlling a torque which is transferred from an engine to the transmission by way of an automated clutch when a motor vehicle is started, wherein the rotational speed of the engine, the drive torque desired by the driver of the motor vehicle, the actual engine torque and the rotational input speed of the transmission are evaluated and signals for controlling nominal values for the engine torque ($M_{EngNom}$) and the clutch torque ($M_{ClutchNom}$) are generated,
**characterised in that**

- in addition a starting characteristic of the motor vehicle by means of which the speed is determined at which the drive torque is guided towards the drive torque desired by the driver of the motor vehicle is evaluated and used for generating the control signals, and **in that**
- the nominal value for the engine torque ($M_{EngNom}$) is composed of a pilot control component ($M_{EngNom,PilotCtrl}$) for compensating the load torque of the clutch and for the change in rotational speed of the inert mass of the engine and of a control component ($M_{EngNom,Ctrl}$) for setting the nominal rotational speed of the engine.

**2.** Method according to claim 1, **characterised in that** the starting characteristic is determined on the basis of an assessment of the driver behaviour and of environmental factors influencing the motor vehicle.

**3.** Method according to claim 1, **characterised in that** the rotational speed level of the engine is determined by means of the starting characteristic.

**4.** Method according to claim 1, **characterised in that** the pilot control is performed on the basis of the following equation of motion of the engine

$$\Theta_{Eng} \cdot \omega_{EngAct} = M_{EngAct} + M_{ClutchAct}$$

where $\Theta_{Eng}$ is the torque of inertia of the engine, $\omega_{Eng,Act}$ is the actual value for the angular acceleration of the engine, $M_{EngAct}$ is the actual engine torque and $M_{ClutchAct}$ is the estimated actual clutch torque.

**5.** Method according to claim 1, **characterised in that** an available torque reserve is calculated from the current drive torque and the actual rotational speed of the engine.

**6.** Method according to claim 1, **characterised in that** the nominal clutch torque is determined according to the following relation:

$$M_{ClutchAct} = M_{Drive} + M_{CorrEng\,Re\,serve} + M_{CorrClutchAct}$$

where

$M_{ClutchAct}$ is the nominal clutch torque,
$M_{Drive}$ is the drive torque,
$M_{CorrEngReserve}$ is the torque correction dependent on the engine torque safety, and
$M_{CorrClutchAct}$ is the torque correction dependent on the estimated actual clutch torque.

**7.** Method according to claim 1, **characterised in that** a first- or second-order transfer function is used in order to estimate an actual clutch torque from the nominal clutch torque based on knowledge of the clutch behaviour.

**8.** Method according to claim 1, **characterised in that** the output variables of the starting characteristic are calculated from the input variables by means of a fuzzy system.

**Revendications**

**1.** Procédé de commande d'un couple de rotation qui est transmis, lors du démarrage d'un véhicule, par un moteur à la boîte de vitesses par l'intermédiaire d'un embrayage automatisé, dans lequel le régime moteur, le couple d'entraînement souhaité par le conducteur du véhicule automobile, le couple moteur réel et le régime d'entrée de la boîte de vitesses sont exploités et des signaux sont générés pour commander des valeurs de consigne pour le couple moteur *($C_{mot.\ consigne}$)* et le couple d'embrayage *($C_{embrayage.\ consigne)}$*, **caractérisé en ce que**

- une caractéristique de démarrage du véhicule automobile, au moyen de laquelle est déterminée la vitesse à laquelle le couple d'entraînement est amené au couple d'entraînement souhaité par le conducteur du véhicule automobile, est en outre exploitée et utilisée pour générer les signaux de commande, et **en ce que**
- la valeur de consigne pour le couple moteur *(C$_{mot.\ consigne}$)* est composée d'une fraction de pré-commande *(C$_{mot.\ consigne\ ,\ pré-com}$)* pour compenser le couple de charge de l'embrayage et pour modifier le régime de la masse inerte du moteur et d'une fraction de réglage (C$_{mot.\ consigne,\ régl.}$ ) pour régler le régime moteur de consigne.

2. Procédé selon la revendication 1, **caractérisé en ce que** la caractéristique de démarrage est établie à l'aide d'une évaluation du comportement du conducteur et des influences de l'environnement sur le véhicule automobile.

3. Procédé selon la revendication 1, **caractérisé en ce que** le niveau de régime moteur est déterminé par la caractéristique de démarrage.

4. Procédé selon la revendication 1, **caractérisé en ce que** la pré-commande est effectuée à l'aide de l'équation de mouvement du moteur :

$$\Theta_{mot.} * \omega_{mot.\ réel} = C_{mot.\ réel} + C_{embrayage\ réel}$$

dans laquelle $\Theta_{mot.}$ est le couple d'inertie moteur, $\omega_{mot.\ réel}$ est la valeur réelle de l'accélération angulaire du moteur, $C_{mot.\ réel}$ est le couple moteur réel **et C $_{embrayage\ réel}$** est le couple d'embrayage réel estimé.

5. Procédé selon la revendication 1, **caractérisé en ce qu'**à partir du couple d'entraînement effectif et du régime réel du moteur, on calcule une réserve de couple disponible.

6. Procédé selon la revendication 1, **caractérisé en ce que** le couple d'embrayage de consigne est déterminé sur la relation suivants :

$$C_{embrayage\ consigne} = C_{entraînement} + C_{réserve\ moteur\ corr.} + C_{embrayage\ corr.\ réel}$$

dans laquelle
C $_{embrayage\ consigne}$ est le couple d'embrayage de consigne,
C $_{entraînement}$ est le couple d'entraînement,
C $_{réserve\ moteur\ corr.}$ est la correction du couple de rotation en fonction de la sécurité du couple moteur, et
C $_{embrayage\ corr.\ réel}$ est la correction du couple de rotation en fonction de l'estimation du couple d'embrayage réel.

7. Procédé selon la revendication 1, **caractérisé en ce qu'**un couple d'embrayage réel avec une fonction de transmission de premier ou de second ordre est estimé à partir du couple d'embrayage de consigne, lorsque le comportement de l'embrayage est connu.

8. Procédé selon la revendication 1, **caractérisé en ce que** les grandeurs de sortie de la caractéristique de démarrage sont calculées avec un système à logique floue à partir des grandeurs de départ.

FIG 1

E1

E2

Motordrehzahl
Motorsollmoment
Getriebeeingangsdrehzahl
Fahrerwunschmoment
Anfahrcharakteristik
Kupplungssollmoment
Kupplungsistmoment

Anfahralgorithmus

~2

3~

Motorsollmoment   Motordrehzahl
Lastmoment   Motor-
             istmoment

Motorsteuergerät/Motor

Getriebeeingangsdrehzahl
Motordrehzahl   Kupplungs-
                istmoment
Kupplungsposition/-druck

Kupplung

6

Getriebeeingangsdrehzahl
Drehmoment
am Getriebeeingang
Fahrzeugbeschleunigung
restlicher Antriebsstrang,
Fahrzeug und Umwelt

7

A1

Fahrzeugbeschleunigung

Motordrehzahl
geschätztes Istmoment
Motormoment
Sollmoment
             Sollposition/-druck
Istposition

Drehmomentenmodell
der Kupplung

~4

1

Sollposition/-druck
             Sollaktuatorstrom
Istposition/-druck

Kupplungsanlage-/
Kupplungsdruckregler

~8

Sollaktuatorstrom
             Ausgangsspannung
Istaktuatorstrom

Stromregler

~10

Kupplungsposition/-druck
Aktuatorspannung
             Aktuatorstrom

Kupplungsaktuator

~11

EP 1 513 700 B1

EP 1 513 700 B1

## FIG 2

| Anfahralgorithmus 2 |
|---|
| Motordrehzahl |
| Getriebeeingangsdrehzahl |
| Kupplungsistmoment |
| Motoristmoment |
| Fahrerwunschmoment |
| Anfahrcharakteristik |

Motorsollmoment

Kupplungssollmoment

Fahrerwunschmoment E1

Anfahrcharakteristik E2

| Antriebsstrang 1 |
|---|
| Motordrehzahl |
| Getriebeeingangsdrehzahl |
| Kupplungsistmoment |
| Motoristmoment |
| Fahrzeugbeschleunigung |

Motorsollmoment

Kupplungssollmoment

A1 Fahrzeug-beschleunigung

# FIG 3

EP 1 513 700 B1

# FIG 4

Zeitkonstante
für positive Änderung

Anfahrcharakteristik

$\boxed{2}$

$\boxed{\diagdown}$ ~15

Zeitkonstante
für negative Änderung

$\boxed{\diagdown}$ ~16

Wunschmoment

$\boxed{1}$

14

t Pos

t Neg

"T"

Verlauf

Ziel

PT1-Filter

$\boxed{1}$

Antriebsmoment

EP 1 513 700 B1

## FIG 5

Fahrerwunschmoment

Fahrerwunsch 1

positiver Sprung
im Wunschmoment

negativer Sprung
im Wunschmoment

Antriebsmoment

Fahrerwunsch 2

Zeit

t Pos

t Neg

Ausgleichszeit
für positive Sprünge

Ausgleichszeit
für negative Sprünge

## FIG 6

niedriges Drehzahlniveau

Moment

Vollast-Kennlinie

mittleres Drehzahlniveau

Antriebsmoment

hohes Drehzahlniveau

Motorsoll-
Drehzahl

Drehzahl für
max. Moment

Motordrehzahl

## FIG 7

## FIG 8

Motoristmoment (4)

Motoristmoment

Kupplungsistmoment (1)

Kupplungsistmoment

Motrsolldrehzahl (2)

Motrsolldrehzahl

Motoristdrehzahl (3)

Motoristdrehzahl

Motoristmoment

Motoristdrehzahl     Korrektur     ~20

Kupplungsistmoment

Überwachung des Kupplungsistmomentes

Kupplungsistmoment     ~18

Vorgesteuertes Motorsollmoment

Motorsolldrehzahl

Motorsollmoment Vorsteueurung

Motorsolldrehzahl     ~19

Geregeltes Motorsollmoment

Motoristdrehzahl

Motordrehzahl Regelung

Kupplungssollmomentkorrektur (1)

+
+

Motorsollmoment (2)

EP 1 513 700 B1

**FIG 9**

$\Theta_{Mot}$

$\omega_{Mot}$    $\omega_{Getriebe}$

$M_{Mot}$    $M_{Kup}$

**FIG 10**

Drehzahl

Motorsoll-Drehzahl

Leerlaufdrehzahl

Getriebe-Drehzahl

0

Zeit

**FIG 11**

Motormoment

Kupplungsmoment

Drehmoment

Fahrerwunschmoment

0

Zeit

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19958076 A1
- DE 4409122 A
- EP 1078805 A
- EP 0328299 A
- DE 10137581
- DE 10211057